# EUROPEAN PATENT APPLICATION

(11) **EP 1 881 700 A2**
(43) Date of publication of application: **23.01.2008**
(21) Application number: 07111004.3
(22) Date of filing: 26.06.2007
(51) Int. Cl.: H04N 5/44, H04N 5/00

(54) **Broadcasting receiving apparatus and software updating method**

(30) Priority: 18.07.2006 KR 20060067090
(71) Applicant: Samsung Electronics Co., Ltd., Suwon-si 442-742 Gyeonggi-do (KR)
(72) Inventor: Seok, Dong-ryun, Songpa-gu, Seoul (KR)
(74) Representative: Perkins, Dawn Elizabeth

(57) **Abstract**

A broadcast receiving apparatus, includes: a storage part which stores a plurality of software therein; a signal receiver which receives a broadcast signal comprising at least one updating information corresponding to the software; a user selection part which is provided to select the updating information; and a controller which controls to download the updating information selected through the user selection part and update the software corresponding thereto to store the software in the storage part.

## Description

Methods and apparatuses consistent with the present invention relate to broadcast receiving apparatus and a software updating method thereof, and more particularly, to a broadcast receiving apparatus which updates application software selected by a user, by module, and a software updating method thereof.

Digital broadcasting such as digital satellite broadcasting, digital cable broadcasting and digital terrestrial wave broadcasting are widely expanding. Such digital broadcasts are received by a broadcast receiving apparatus such as a digital TV or a set-top box.

Such a broadcast receiving apparatus provides various functions including an electronic program guide (EPG), thereby necessitating the development of software. Software is frequently updated to advance, add and revise functions, remove bugs, etc.

Unlike a PC, the broadcast receiving apparatus is required to update software by simple manipulation. The broadcast receiving apparatus does not have a communication line for updating the software or a secondary recording device such as a hard disk.

In a conventional software updating method, when a storable recording medium is connected to the broadcast receiving apparatus, all the software already installed in the broadcast receiving apparatus is updated and stored in the recording medium. As the software updating program is comprised of a single image file, a user downloads software updating information, as a whole, to update the software of the broadcast receiving apparatus.

With the conventional software updating method, a user may add unnecessary functions to the software, and so it takes long time to download the whole image file. When the user uses air wave or terrestrial wave broadcasting, it takes more time to update the software.

Also, the broadcast receiving apparatus should be connected to an updating-only network or a software updating recording medium, in order to update the software.

Accordingly, it is an aspect of the present invention to provide a broadcast receiving apparatus, which downloads software updating information selected by a user among stored software to update software and a software updating method thereof. Also, it is another aspect of the present invention to provide a broadcast receiving apparatus, which receives updating information included in broadcast information regardless of existence of an updating only network or a storage medium, and a software updating method thereof.

Additional aspects and/or advantages of the present invention will be set forth in part in the description which follows and, in part, will be obvious from the description, or may be learned by practice of the present invention.

The foregoing and/or other aspects of the present invention are also achieved by providing a broadcast receiving apparatus, comprising: a storage part which stores a plurality of software instructions therein; a signal receiver which receives a broadcast signal comprising at least one updating information corresponding to the software instructions; a user selection part which is provided to select the updating information; and a controller which controls to download the updating information selected through the user selection part and update the software instructions corresponding thereto to store the software instructions in the storage part.

According to the exemplary embodiment of the present invention, the controller compares an inherent ID of the software stored in the storage part and an inherent ID of the updating information and determines whether the updating information corresponds to the software instructions.

According to the exemplary embodiment of the present invention, the updating information comprises a transport stream (TS) for an over the air (OTA) type broadcast signal.

According to the exemplary embodiment of the present invention, the inherent ID of the updating information is included in a header of the TS for the OTA type broadcast signal.

According to the exemplary embodiment of the present invention, the updating information comprises at least one of an update, bug fixing, and amendment of the software.

According to the exemplary embodiment of the present invention, the controller comprises a user interface (UI) generator which generates a UI screen displaying the updating information corresponding to the inherent ID when the updating information corresponds to the software instructions.

According to the exemplary embodiment of the present invention, the UI screen comprises a selection menu image to select the updating information by a user. According to the exemplary embodiment of the present invention, the broadcast receiving apparatus further comprises a display part, wherein the controller displays the UI screen on the display part.

The foregoing and/or other aspects of the present invention are also achieved by providing a software instruction updating method of a broadcast receiving apparatus, comprising: receiving a broadcast signal comprising at least one updating information corresponding to the software; selecting at least one of the updating information; and updating the software instructions by downloading the selected updating information.

According to the exemplary embodiment of the present invention, the software updating method further comprises: comparing an inherent ID of the software instructions and an inherent ID of the updating information to determine whether the updating information corresponds to the software instructions.

According to the exemplary embodiment of the present invention, the software instructions updating method further comprises: generating a user interface (UI) screen to display the software corresponding to the inherent ID.

According to the exemplary embodiment of the present invention, the generating the UI screen comprises generating a selection menu image to select the updating information by a user.

The above and/or other aspects and advantages of the present invention will become apparent and more readily appreciated from the following description of the exemplary embodiments, taken in conjunction with the accompanying drawings of which:
Figure 1 is a control block diagram of a broadcast receiving apparatus according to an exemplary embodiment of the present invention;
Figure 2 illustrates a user selection image according to an exemplary embodiment of the present invention;
Figure 3 is a control flowchart of a software updating method according to an exemplary embodiment of the present invention; and
Figure 4 is a control flowchart of a software updating method according to exemplary embodiment of the present invention.

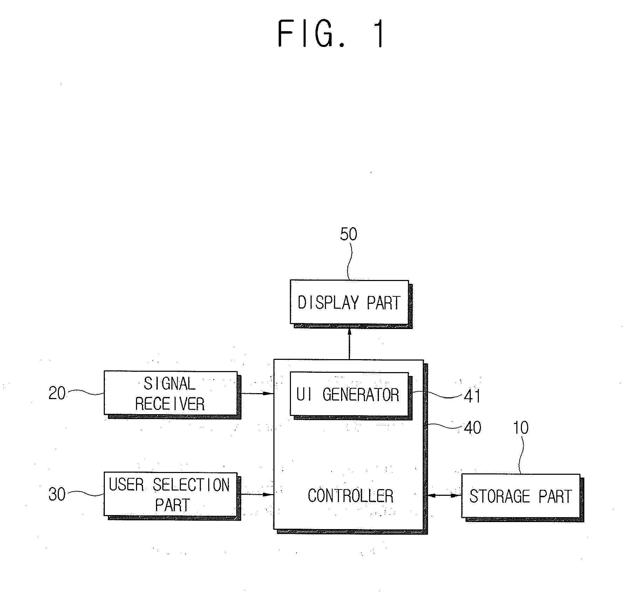

Reference will now be made in detail to the exemplary embodiments of the present invention, examples of which are illustrated in the accompanying drawings, wherein like reference numerals refer to like elements throughout.
As shown in Figure 1, a broadcast receiving apparatus according to the present invention comprises a storage part 10, a signal receiver 20, a user selection part 30 and a controller 40.

The storage part 10 stores a plurality of software instructions therein to perform various functions of the broadcast receiving apparatus. For example, the storage part 10 may be realized as a flash memory.

More specifically, the storage part 10 may store a plurality of software instructions which comprises an inherent ID together with information on software titles and versions, by module. The storage part 10 may be a storage flash memory which stores an object code, which is generated by compiling a source code of software, by module, and may be an active flash memory which stores an execution code generated by linking the object code. As the storage flash memory stores a modulized object code of software, only necessary functions of the software may be selectively updated.

The active flash memory comprises a boot block. The boot block stores a basic program to drive software, a linking program to link the object code, and a control program to flash the memory. The boot block is not removable during use. Here, the linking program links the object code stored in the storage flash memory to form the execution code. In this case, the execution code may be stored in the active flash memory.

The signal receiver 20 receives a broadcast signal which comprises software updating information. The signal receiver 20 may include a tuner to receive a digital broadcast signal.

When a user selects a predetermined channel, the signal receiver 20 tunes the predetermined channel selected by a control signal of the controller 40 (described later) .

For example, software of the broadcast receiving apparatus according to an exemplary embodiment of the present invention is updated to the latest version thereof through service information (SI) of a digital broadcast signal, i.e., updated through an over the air (OTA) type digital broadcast signal.

A transport stream (TS) is a time-multiplexed signal of images, audio and additional information transmitted by digital broadcasting. For example, the TS may be received through the signal receiver 20 after being quadrature phase shift keying(QPSK) modulated.

A manufacturer of the broadcast receiving apparatus organizes a TS file of the OTA type broadcast signal having updating information on the concerned software by module, when the software requires updating to improve performance, fixing bugs, or adding/changing a concerned device. The TS file may be included in the broadcast signal which is transmitted through a broadcasting satellite.

The broadcast signal having the TS of the OTA type comprises an inherent ID of software corresponding to the updating information, in a header thereof. The user selection part 30 receives a selection signal from a user to select software to be updated. The user selection part 30 may receive various commands to operate the broadcast receiving apparatus other than the selection signal. The user selection part 30 may be realized as a remote controller, a button provided in the broadcast receiving apparatus, or a touch screen of a display part 50 such as a cathode ray tube (CRT), a liquid crystal display (LCD), and a plasma display panel (PDP).

The controller 40 downloads the updating information of the selected software and updates the selected software when the software is selected through the user selection part 30.

The controller 40 controls the boot-up of a system when a user turns on power. Typically, a loader of the broadcast receiving apparatus is driven first when booting the system. The loader loads software files stored in the storage part 10 into a main memory device, and checks an OS_Upgrade_Flag to determine whether to update the software stored in the storage part 10.

When the flag does not require the update of the operating system program, the controller 40 controls the loader to complete the loading operation, and reads tuning information stored in the storage part 10 after executing an application which executes the operating system program file loaded into the main memory device of the system controller.

The controller 40 tunes a digital broadcast channel of the broadcasting satellite based on tuning information, e.g., inherent frequency information, polarization information, symbol rate information, and forward error correction (FEC) information corresponding to the broadcasting satellite, and then checks the service information (SI) transmitted through the digital broadcast channel.

The controller 40 checks an inherent system ID and the software version information included in service description table (SDT) information of the SI, and compares the inherent system ID of the software stored in the storage part 10 and the software version of the operating program.

When it is determined that the system IDs are identical and the software versions are different from each other, e.g., the software version checked through the SDT information is the latest one compared to that of the operating program stored in the storage part 10, the controller 40 determines that the latest version of the operating program exists.

Then, the controller 40 controls a UI generator 41 to output to the display part 50 a UI screen inquiring whether to download the latest version of the operating system program and update. When a user commands a software update, the controller 40 downloads the updating information of the concerned software, updates the software, and stores the software in the storage part 10.

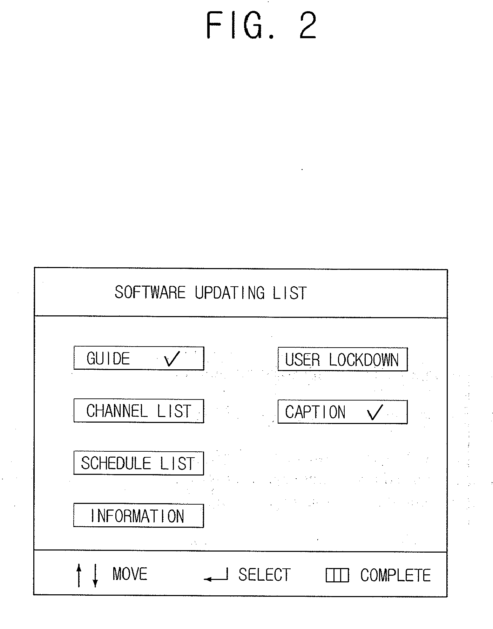

Figure 2 illustrates a user selection image to select the updating information according to an exemplary embodiment of the present invention.

As shown in Figure 2, when software updating information such as a guide, a channel list, a schedule list, a user lockdown and a caption is included in the received broadcast signal, the UI generator 41 displays the software information corresponding to the updating information received as a software updating list, thereby enabling a user to select the software to be updated.

When a user selects the software that operates the guide and caption, the controller 40 reads only the software performing the guide and caption operations from the TS file, and downloads for updating.

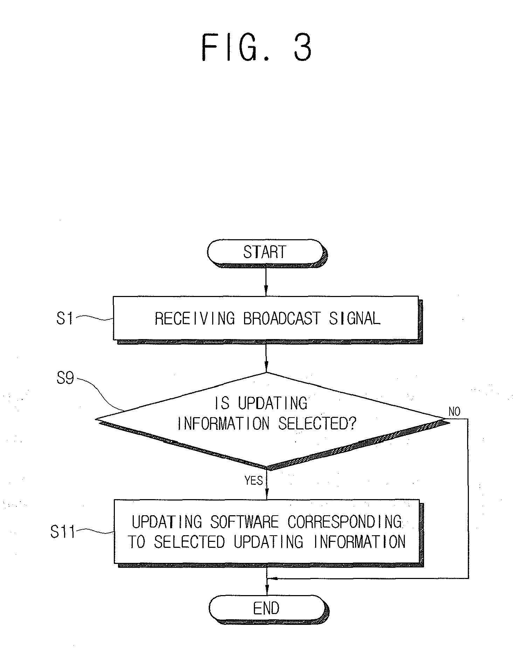

Figure 3 illustrates a software updating method of the broadcast receiving apparatus according to an exemplary embodiment of the present invention.

When a user selects a predetermined channel, the signal receiver 20 tunes the predetermined channel and receives the broadcast signal corresponding thereto, by a control signal of the controller 40 (S1). The predetermined channel of the broadcast signal may comprise the updating information of the software transmitted from a manufacturer of the broadcast receiving apparatus.

When the updating information of the software is selected by a user (S9), the controller 40 downloads only the selected updating information, and updates the software corresponding thereto (S11).

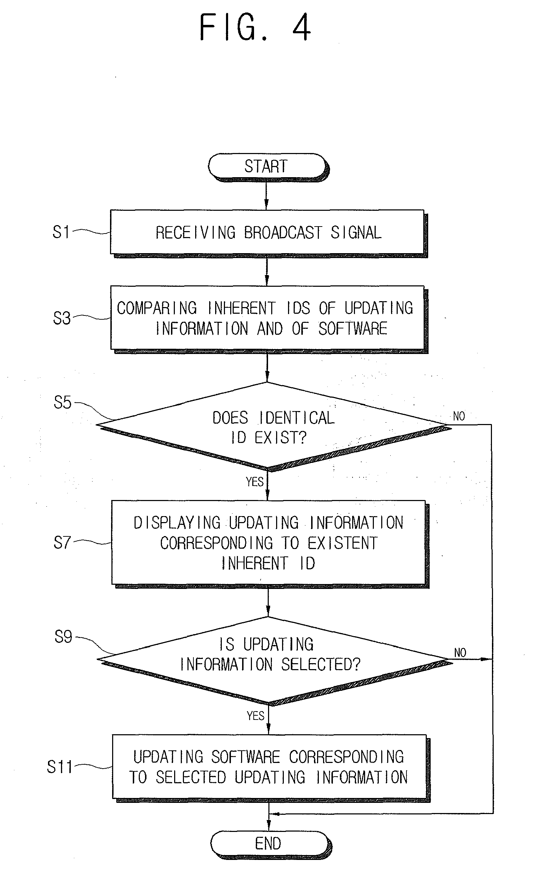

Figure 4 illustrates a software updating method of the broadcast receiving apparatus according to another exemplary embodiment of the present invention. First, the broadcast receiving apparatus receives a broadcast signal corresponding to a predetermined channel selected by a user (S1).

The controller 40 divides the received broadcast signal and checks a header of a TS file to determine whether updating information is included therein. The controller 40 checks a software version corresponding to the updating information and a model name of the broadcast receiving apparatus comprising the concerned software to compare them with current information pre-stored in the broadcast receiving apparatus.

When it is determined that the updating information exists, the controller 40 compares the inherent ID of the updating information and an inherent ID of the software stored in the storage part 10 (S3). When the identical inherent ID exists based on a comparison result (S5), the controller 40 generates a UI screen, and displays on the display part 50 the updating information corresponding to the existing inherent ID (S7) of the software.

When a user selects the updating information (S9), the controller 40 downloads only the selected updating information from the modularized updating information, updates the software corresponding thereto, and stores the software in the storage part 10 (S11).

As an example of the present invention, the updating information is included in the received broadcast signal, but not limited thereto. Alternatively, the updating information may be received through cable broadcasting or terrestrial wave broadcasting. As described above, the present invention provides a broadcast receiving apparatus which selects updating information for only desired software from stored software, in order to reduce the updating time of the software, and a software updating method thereof.

Also, the present invention provides a broadcast receiving apparatus which updates software through updating information included in a broadcast signal, without being connected to an additional network or a storage medium to update the software, and a software updating method thereof.

Thus, a manufacturer may provide various additional functions with an easy updating method, and create a business model to sell additional functions, other than a broadcast receiving apparatus.

Although a few exemplary embodiments of the present invention have been shown and described, it will be appreciated by those skilled in the art that changes may be made in these exemplary embodiments without departing from the scope of the invention as defined in the appended claims.

## Claims

1. A broadcast receiving apparatus, comprising:
a storage part (10) having a plurality of software instructions stored therein;
a signal receiver (20) configured to receive a broadcast signal comprising at least one updating information corresponding to at least one software instruction of the plurality of software instructions;
a user selection part (30) for selecting the one updating information as selected updating information; and
a controller (40) configured to control a download of the selected updating information selected by the user selection part (30) and update the one software instruction corresponding to the selected updating information, and store the updated software instruction in the storage part (10).

2. The broadcast receiving apparatus according to claim 1, wherein the controller (40) is configured to compare an identifier (ID) of the one software instruction stored in the storage part (10) and an ID of the one updating information and determine whether the one software instruction is to be modified.

3. The broadcast receiving apparatus according to claim 1 or 2, wherein the one updating information comprises a transport stream (TS) for an over the air (OTA) type broadcast signal.

4. The broadcast receiving apparatus according to claim 3, wherein the ID of the one updating information is included in a header of the TS for the OTA type broadcast signal.

5. The broadcast receiving apparatus according to any one of the preceding claims, wherein the one updating information accomplishes at least one of an update, bug fixes, and amendment of the one software instruction.

6. The broadcast receiving apparatus according to any one of the preceding claims, wherein the controller (40) comprises a user interface (UI) generator which generates a UI screen displaying the one updating information corresponding to an identifier (ID) of the one update information when the one software instruction is to be modified.

7. The broadcast receiving apparatus according to claim 6, wherein the UI screen comprises a selection menu image, wherein a user uses the selection menu image to select the one updating information.

8. The broadcast receiving apparatus according to claim 6 or 7, further comprising a display part (50), wherein the controller (40) is configured to display the UI screen on the display part (50).

9. A software updating method of a broadcast receiving apparatus, comprising:
receiving a broadcast signal comprising at least one updating information corresponding to at least one of a plurality software instructions;
selecting the at least one updating information; and
updating the at least one software instruction by downloading the selected at least one updating information.

10. The software updating method according to claim 9, further comprising: comparing an identifier (ID) of the at least one software instruction and an ID of the at least one updating information to determine whether the at least one software instruction is to be modified.

11. The software updating method according to claim 10, further comprising:
generating a user interface (UI) screen to display the software instructions corresponding to the ID.

12. The software updating method according to claim 11, wherein the generating the UI screen comprises generating a selection menu image, wherein a user uses the selection menu image to select the at least one updating information.
